# EUROPEAN PATENT APPLICATION

(11) **EP 3 546 292 A1**
(43) Date of publication of application: **02.10.2019**
(21) Application number: 18887204.8
(22) Date of filing: 26.04.2018
(51) Int. Cl.: B60Q 5/00

(54) **ON-VEHICLE WARNING TONE APPARATUS FOR VEHICLE, AND ON-VEHICLE WARNING TONE DEVICE**

(30) Priority: 12.02.2018 CN 201810143928
(71) Applicant: Shanghai SllC Transportation Electric Co., Ltd, Xu Hui District Shanghai 200030 (CN)
(72) Inventor: XU, Guangzhen, Shangai 200030 (CN); YAN, Guojin, Shangai 200030 (CN); HU, Weicheng, Shangai 200030 (CN); QIN, Jin, Shangai 200030 (CN); SONG, Xiaojue, Shangai 200030 (CN); LUI, Jianmei, Shangai 200030 (CN); HUANG, Jianlong, Shangai 200030 (CN)
(74) Representative: Lippert Stachow Patentanwälte Rechtsanwälte
(86) International application number: PCT/CN2018/084561
(87) International publication number: WO 2019/153526

(57) **Abstract**

An on-board warning sound device and apparatus for vehicle is provided. The on-board warning sound apparatus for a vehicle comprises: a horn assembly comprising a horn coil assembly and a horn trumpet connected with the horn coil assembly; a loudspeaker arranged independently of the horn assembly; and a control unit connected with the horn assembly and the loudspeaker, wherein the control unit is configured to generate a sound intensity control signal according to the current state of the vehicle and a surrounding environment of the vehicle, and to control the horn assembly to emit horn warning sounds based on the sound intensity control signal, and wherein the control unit is further configured to generate a simulated engine sound signal according to the current state of the vehicle, and to control the loudspeaker to emit simulated engine warning sounds based on the simulated engine sound signal.

## Description

### Technical Field

Provided is a warning sound device, specifically, an on-board warning sound device for vehicle.

### Background Art

Traditional vehicle horns are widely used in vehicles as warning apparatus. When a vehicle driver drives the vehicle, the driver presses a vehicle horn and the vehicle horn generates sound signals for warning sounds, so as to warn the pedestrians and arouse the attention of the surrounding vehicles. However, to the pedestrians, such horn sounds is distracting and may lead to other problems.

New energy vehicles driven by electric motors have less impact on environments than traditional vehicles, so they have a promising prospect. However, when driven by electric motors, new energy vehicles are almost silent. The silent driving condition neither enables the driver to feel speed of the vehicles directly, nor to remind the passers-by of the potential danger. At present, taking safety into consideration, the vehicle manufactures install a sound source device for simulating noise in the motor cab. Nevertheless, there are many problems in doing so, such as higher requirements for simulating noise device, increased costs, and complex installation and so on.

Therefore, it is desirable to have a warning device for a vehicle so as to overcome the shortcomings in the art.

### Summary of the Invention

In view of the above problems, provided is an on-board warning sound device and on-board warning sound apparatus for vehicle, which has a simple structure and is easy to install, operate and maintain.

Thus, according to one aspect of the present application, provided is an on-board warning sound apparatus for vehicle. The on-board warning sound apparatus comprises:
a horn assembly comprising a horn coil assembly and a horn trumpet connected with the horn coil assembly;
a loudspeaker arranged independently of the horn assembly; and
a control unit connected with the horn assembly and the loudspeaker, wherein the control unit is configured to generate a sound intensity control signal according to the current state of the vehicle and a surrounding environment of the vehicle, and to control the horn assembly to emit horn warning sounds based on the sound intensity control signal, and wherein the control unit is further configured to generate a simulated engine sound signal according to the current state of the vehicle, and to control the loudspeaker to emit simulated engine warning sounds based on the simulated engine sound signal.

According to a possible embodiment of the disclosure, the horn coil assembly and the control unit are arranged in a first housing of the vehicle warning sound apparatus, the loudspeaker is disposed in a second housing of the vehicle warning sound apparatus, and the second housing is independent of the first housing.

According to a possible embodiment of the disclosure, the control unit comprises a microcontroller having a memory unit for storing simulated engine sound data, and the simulated engine sound data corresponds to speeds of the vehicle.

According to a possible embodiment of the disclosure, the control unit includes a bus interface disposed in the first housing and connected to a body control module of the vehicle.

According to a possible embodiment of the disclosure, the microcontroller is electrically connected to the bus interface to receive a current state signal indicative of the current state of the vehicle from the body control module via the bus interface.

According to a possible embodiment of the disclosure, the microcontroller generates the sound intensity control signal according to the current state signal and surrounding environment of the vehicle, wherein the current state of the vehicle includes current vehicle speed, reverse driving state, tail gate state and electric charging state, and the surrounding environment of the vehicle includes weather, lighting, road conditions and the region in which the vehicle travels.

According to a possible embodiment of the disclosure, the microcontroller has a processing unit connected to the storage unit and the bus interface, wherein the processing unit is configured to determine the simulated engine sound signal corresponding to the current state according to the current state signal received from the bus interface and the simulated engine sound data stored in the storage unit.

According to a possible embodiment of the disclosure, the vehicle warning sound apparatus further comprises an audio driving circuit connected to the microcontroller and the loudspeaker, the audio driving circuit is configured to amplify the simulated engine sound signal received from the microcontroller, and the loudspeaker is configured to emit the simulated engine warning sound according to the amplified simulated engine sound signal.

According to a possible embodiment of the disclosure, the second housing is provided with a socket, and the loudspeaker is electrically connected with the audio driving circuit via the socket.

According to a possible embodiment of the disclosure, the horn coil assembly comprises an electromagnetic coil with a stationary iron core and a vibration diaphragm with a moving iron core, and the horn assembly further comprises a driving circuit electrically connected with the electromagnetic coil and the microcontroller.

According to a possible embodiment of the disclosure, the microcontroller is configured to control a duty cycle for driving a conduction of the electromagnetic coil based on the sound intensity control signal, so as to adjust an intensity of the horn warning sounds.

According to a possible embodiment of the disclosure, the microcontroller, the driving circuit, the protection circuit and the audio driving circuit are disposed on a common circuit board in the first housing.

According to a possible embodiment of the disclosure, the first housing is a waterproof housing, the second housing is water splash prevention housing, and a sealing structure is provided between the loudspeaker and the second housing.

According to another aspect of the present application, provided is an on-board warning sound device for vehicle. The on-board warning sound device comprises:
a horn assembly comprising a horn coil assembly and a horn trumpet connected with the horn coil assembly; and
a control unit connected with the horn assembly, wherein the control unit is configured to generate a sound intensity control signal according to the current state and a surrounding environment of the vehicle, and wherein the control unit is further configured to control the horn assembly to emit horn warning sounds based on the sound intensity control signal.

According to a possible embodiment of the disclosure, the horn coil assembly and the control unit are arranged in the housing of the vehicle warning sound apparatus, wherein the housing is a waterproof housing, and the horn trumpet is fixed on an end surface of the housing.

According to a possible embodiment of the disclosure, the control unit comprises a microcontroller and a bus interface connected with the microcontroller, the bus interface is arranged in the housing and connected with a vehicle body control module, and the microcontroller is configured to receive a current state signal indicative of the current state of the vehicle from the vehicle body control module via the bus interface.

According to a possible embodiment of the disclosure, the microcontroller is configured to generate the sound intensity control signal according to the current state signal of the vehicle and surrounding environment of the vehicle, wherein the current state of the vehicle includes current vehicle speed, reverse driving state, tail gate state and electric charging state, and the surrounding environment of the vehicle includes weather, lighting, road conditions and the region in which the vehicle travels.

According to a possible embodiment of the disclosure, the horn coil assembly comprises an electromagnetic coil with a stationary iron core and a vibration diaphragm with a moving iron core, and the horn assembly further comprises a driving circuit electrically connected with the electromagnetic coil and the microcontroller, wherein the microcontroller is configured to control a duty cycle for driving a conduction of the electromagnetic coil based on the sound intensity control signal, so as to adjust an intensity of the horn warning sound.

According to a possible embodiment of the disclosure, the microcontroller, the driving circuit and the protection circuit are arranged on a common circuit board in the housing.

According to the disclosure, the vehicle warning sound device and the vehicle warning sound apparatus realize the warning function of vehicles with a simple structure and low cost. Moreover, they are easy to install, use and test and maintain, and have a wider application and better user experience.

### Brief Description of the Drawings

The following part is a more thorough understanding of the above mentioned and other aspects of this application in accordance with specific embodiments and in conjunction with the accompanying drawings, in the accompanying drawings:

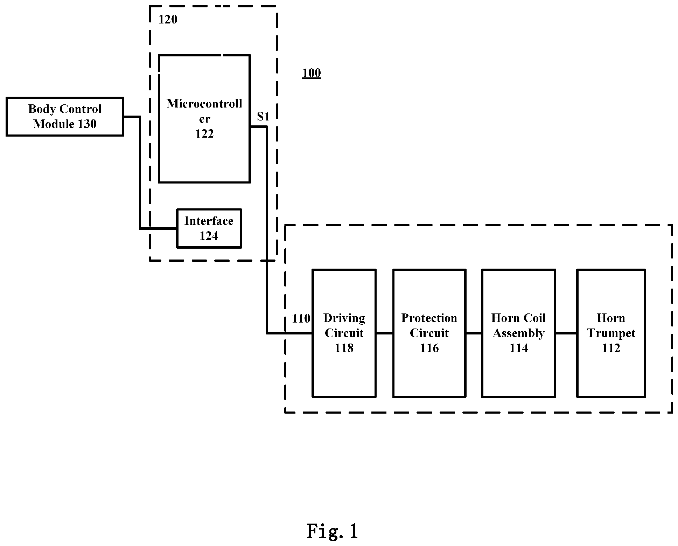

Fig. 1 shows a block diagram of an on-board warning sound device for a vehicle according to an embodiment of the present application.

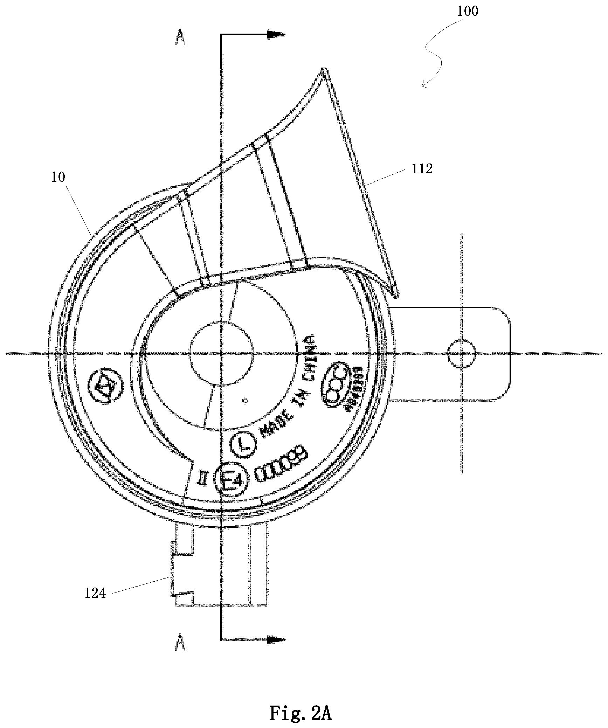

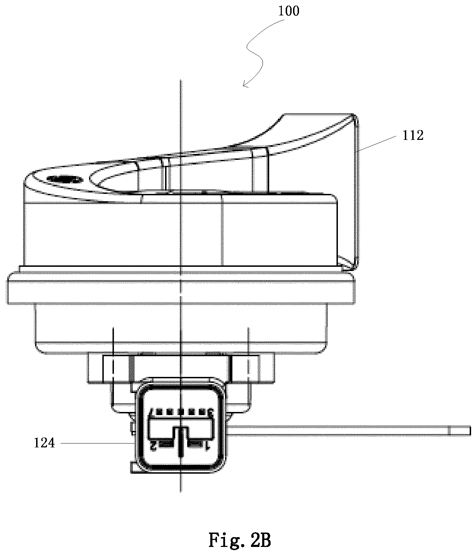

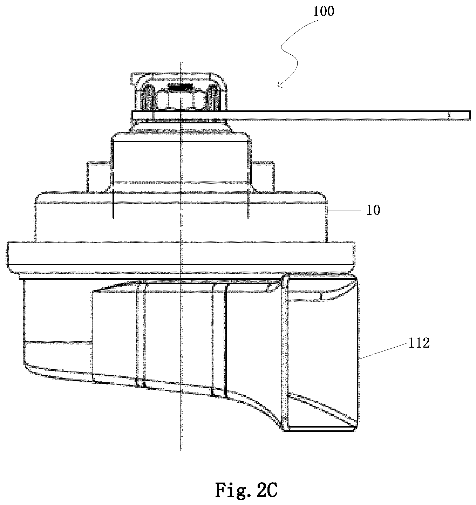

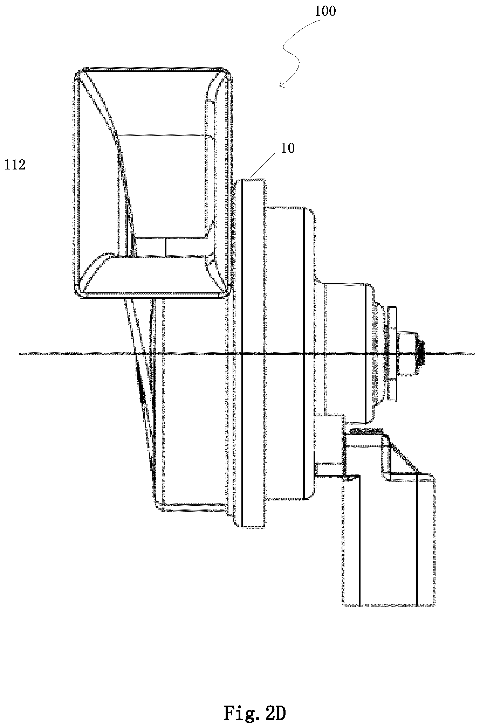

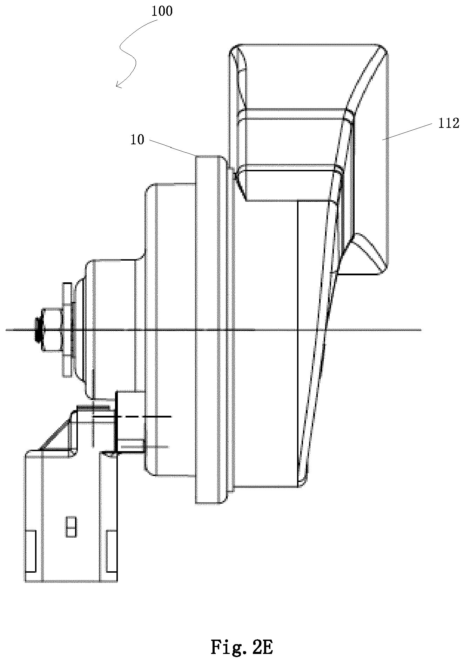

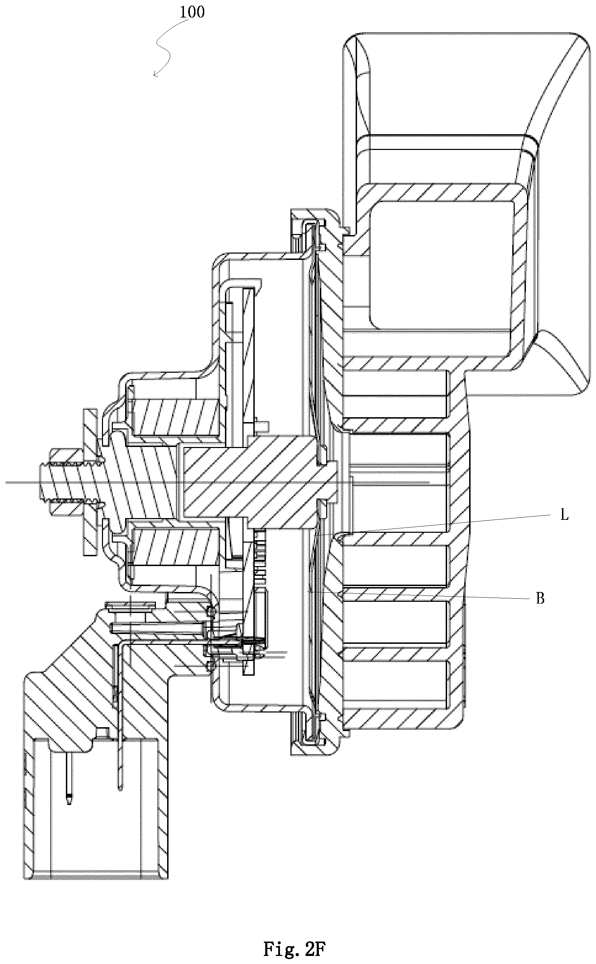

Figure 2A-2F shows the overall structure schematic diagram of the vehicle warning sound device for a vehicle according to the embodiment of this application, in which Figure 2A is its main view, Figure 2B is its elevation view, Figure 2C is its top view, Figure 2D is its right view, Figure 2E is its left view, and Figure 2F is a cross-sectional diagram along the A-A line of Figure 2A.

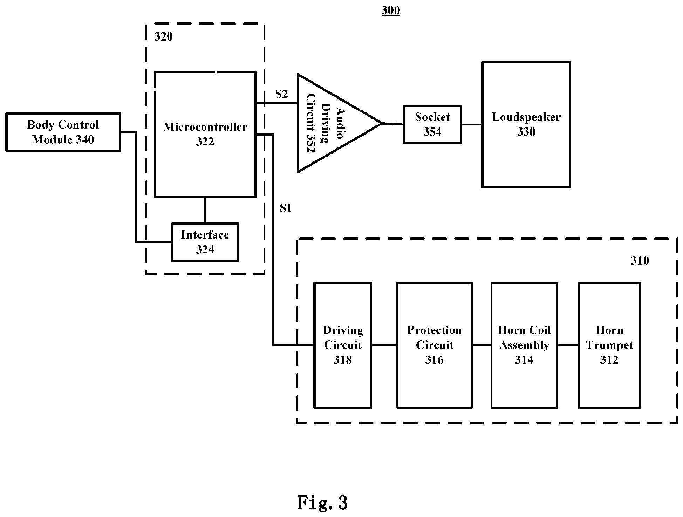

Fig. 3 shows a block diagram of the on-board warning sound apparatus for a vehicle according to an embodiment of the present application.

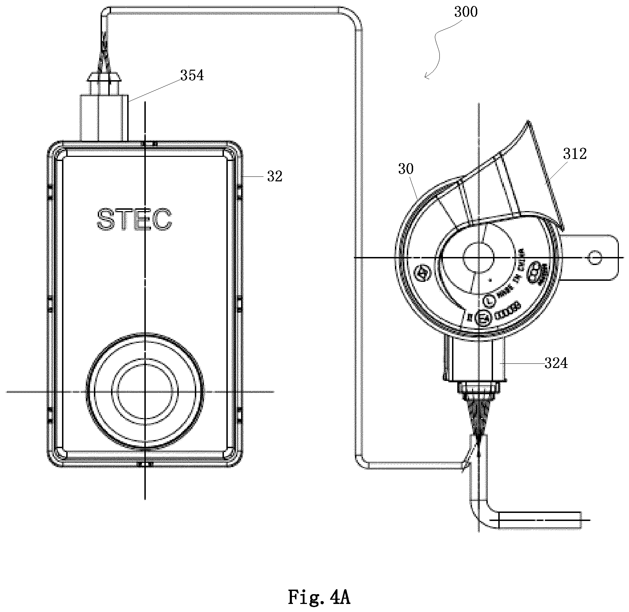

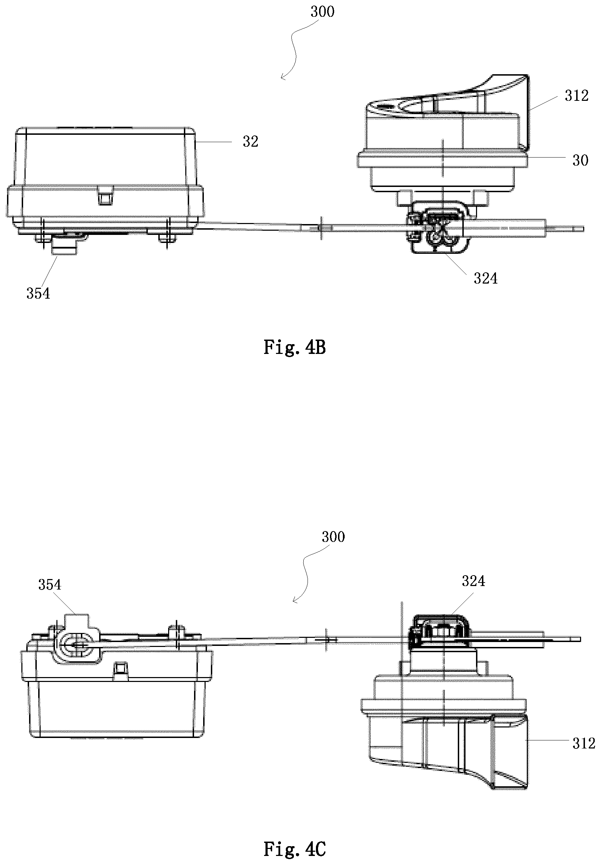

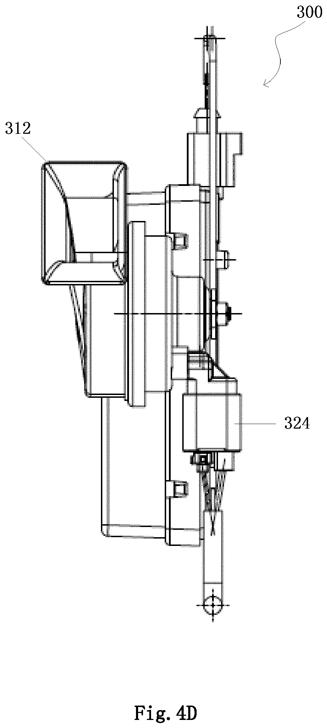

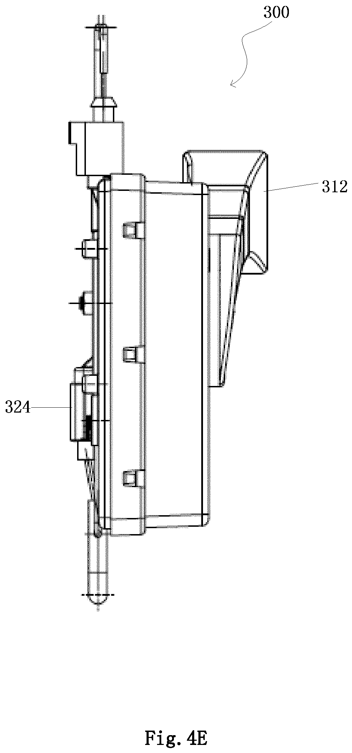

Figure 4A-4E shows a schematic diagram of the overall structure of the on-board warning sound apparatus for a vehicle according to the embodiment of this application, in which Figure 4A is its main view, Figure 4B is its elevation view, Figure 4C is its top view, Figure 4D is its right view, and Figure 4E is its left view.

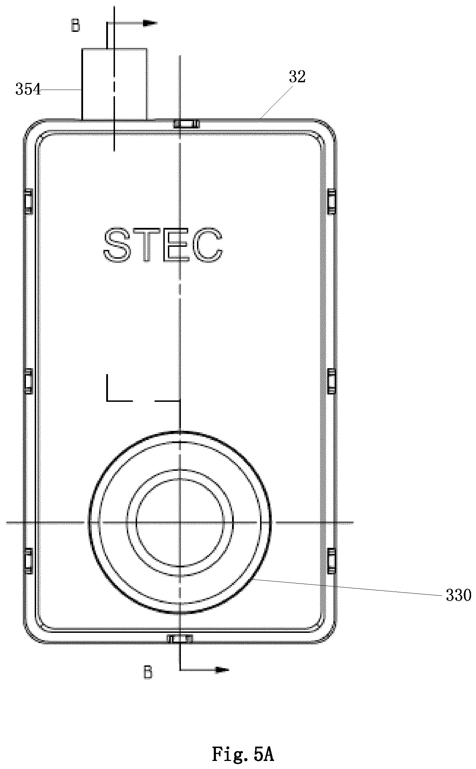

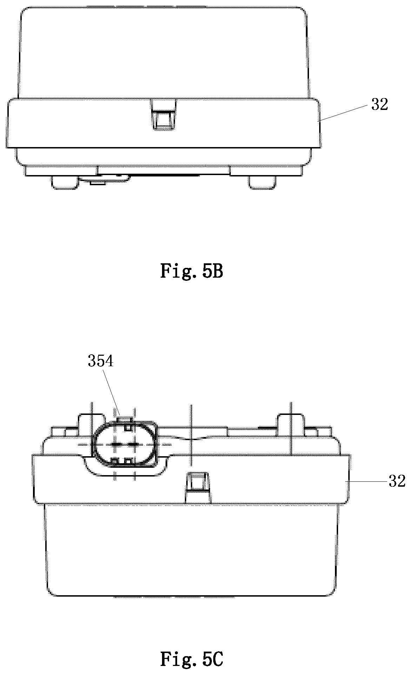

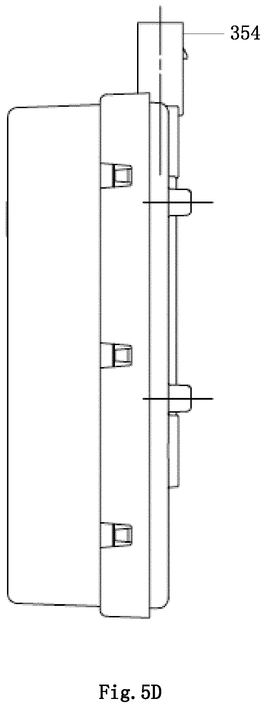

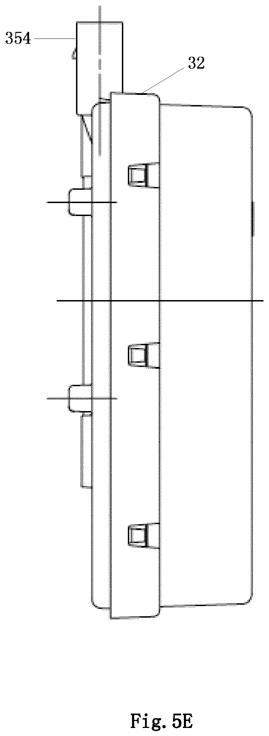

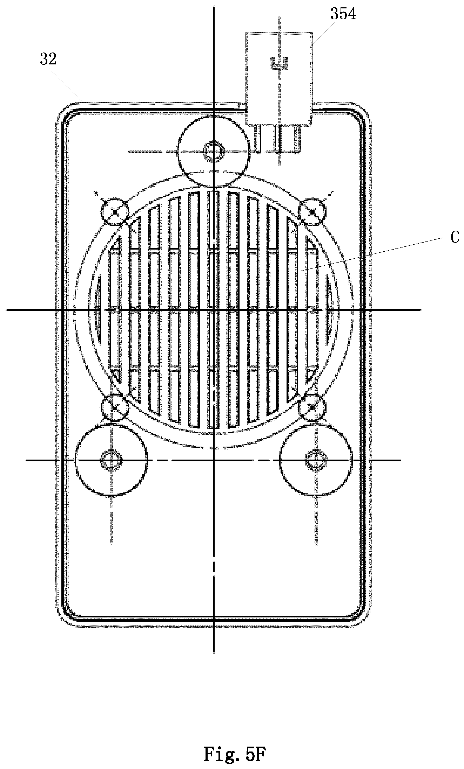

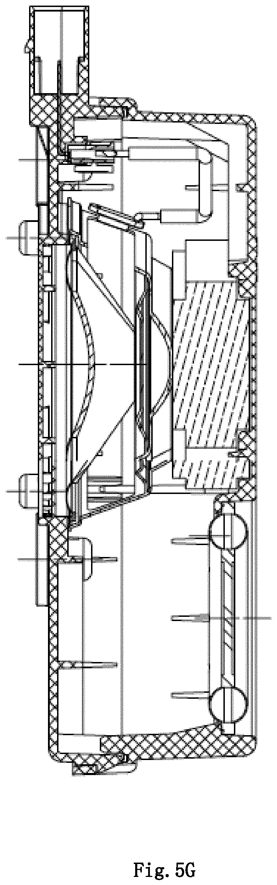

Fig. 5A-5G shows a schematic diagram of a part of the structure of the on-board warning sound apparatus according to the embodiment of this application, in which Fig. 5A is its main view; Fig. 5B is its elevation view; Fig. 5C is its top view; Fig. 5D is its right view; Fig. 5E is its left view; Fig. 5F is its rear view; Fig. 5G is a cross-sectional diagram along the B-B line in Fig. 5A.

### Detailed Description of Preferred Embodiments

Some embodiments of the present application will now be described with reference to the accompanying drawings.

Provided are on-board warning sound devices and on-board warning sound apparatus for vehicle. The vehicles herein include quiet vehicles, such as electric vehicles (EV), hybrid electric vehicles, etc., which produce little sound while driving. The simulated engine sound refers to the simulation sound of the engine sound of conventional fuel vehicles for the above mentioned quiet vehicles under driving, acceleration or deceleration conditions. The simulated engine sound data refers to the simulated sound data of an engine of a traditional fuel vehicle corresponding to the same state (e.g., the same speed) of the vehicle. The simulated engine sound signal refers to the simulated sound signal of an engine of a traditional fuel vehicle corresponding to the same speed of the vehicle.

Fig. 1 shows a block diagram of an on-board warning sound device for a vehicle according to an embodiment of the present application. As shown in Fig. 1, the vehicle warning sound device 100 includes a horn assembly 110 and a control unit 120. The horn assembly 110 includes a horn coil assembly 114 and a horn trumpet 112 connected to the horn coil assembly 114. The control unit 120 is connected with the horn assembly 110. Referring to Figure 2A, the control unit 120 and the horn assembly 110 are encapsulated in the housing 10 of the vehicle warning sound device 100. The housing 10 is, for example, a waterproof housing. Thus, when the vehicle warning device 100 is immersed in water, it will not be damaged. The horn trumpet 112 is fixed on one end surface of the housing 10.

Continuing with FIG. 1, the control unit 120 includes a microcontroller 122 and a bus interface 124 connected to the microcontroller 122. The bus interface 124 is connected with a body control module 130, which includes a plurality of sensors, for example, sensors for sensing the current state of a vehicle (e.g., speed sensors, tail gate sensors, etc.). In one example, a vehicle can also access a network, such as a GPS network, to obtain the region in which the vehicle travels. The microcontroller 122 obtains the current state signal indicating the current state of the vehicle from the body control module 130 through bus interface 124. Moreover, microcontroller 122 obtains information indicating the surrounding environment of the vehicle. For example, the current state of the vehicle includes vehicle start state, vehicle driving state (for example, average speed, acceleration or deceleration of the vehicle), tail gate state, electric charging state and reverse driving state. The environment around the vehicle includes weather, lighting, road conditions, and the region in which the vehicle travels. The microcontroller 122 generates a sound intensity control signal S1 according to the current state of the vehicle and the surrounding environment of the vehicle. The horn assembly 110 generates a horn warning sound under the control of the sound intensity control signal S1. The horn warning sound is emitted through the horn trumpet 112.

In the following part, the working principle of the intelligent horn warning sound with a variable sound intensity produced by the vehicle warning sound device according to the application is described in detail in conjunction with the drawings.

The on-board warning sound apparatus 100 emits a horn warning sound with a corresponding sound intensity according to the current state of the vehicle and the surrounding environment of the vehicle. For example, the corresponding sound intensity of the horn warning sound is higher when the vehicle is traveling at a higher speed in the day. On the contrary, the corresponding sound intensity of the horn warning sound is lower when the vehicle is driving at night at a lower speed. For example, when a vehicle is traveling in a mountainous region or a dangerous region, the corresponding sound intensity of the horn warning sound is higher. When a vehicle is traveling in the urban region, the corresponding sound intensity of the horn warning sound is lower or forbidden. In one embodiment, the on-board warning sound apparatus 100 can emit a horn warning sound of a predetermined level of sound intensity according to the region in which the vehicle travels. It should be understood that the sound intensity of horn warning sound can be set and changed according to the specific application.

The horn coil assembly 114 includes an electromagnetic coil with a stationary iron core and a vibration diaphragm with a moving iron core. The sound intensity control signal S1, for example, is a switching signal which controls the frequency of suction and loosening of the moving iron core and the vibration diaphragm in the electromagnetic coil assembly, so as to adjust the sound intensity of the horn warning sound by adjusting the duty cycle of the conduction of the coil. The horn assembly 110 also includes a driving circuit 118, which is electrically connected with the electromagnetic coil and the microcontroller 122. The microcontroller 122 controls the duty cycle of the conduction of the electromagnetic coil according to the calculated sound intensity control signal S1 (for example, switching signal). The larger the duty cycle is, the stronger the sound intensity of vehicle horn warning sound is. For example, when the speed is high and the road condition is dangerous, the duty cycle of the sound intensity control signal S1 is large, which emits a louder horn warning sound. On the contrary, the duty cycle of the sound intensity control signal S1 is smaller when the light intensity is weak at night and the vehicle speed is low, which emits a smaller horn warning sound. For example, when a vehicle is driving in a mountainous region, the sound intensity of the horn warning sound is higher. When a vehicle is driving in the urban region, the horn warning sound is smaller or forbidden. It should be understood that the relationship between the horn sound intensity and the surrounding environment can be set according to the specific application situation.

In one example, the horn assembly 110 also includes a protection circuit 116, which is electrically connected to the driving circuit 118 to protect the driving circuit 118.

In one embodiment, as shown in Fig. 2F, the microcontroller 122, the driving circuit 118 and the protection circuit 116 are located on a common circuit board B in the housing 10. The horn coil assembly 114 is electrically connected with the circuit board B through a lead L. Of course, according to the specific application, the layout of these components can also be realized in other suitable ways, without particular limitation. For example, according to the specific application, one or more of the microcontroller 122, the driving circuit 118 and the protection circuit 116 are arranged on different circuit boards.

It can be seen that the application of the vehicle warning sound device in a vehicle can emit intelligent horn warning sound. The sound intensity of the horn warning sound can be adjusted according to the current vehicle state and the environment of the vehicle. It can warn the pedestrians and vehicles around the vehicle, and is adaptive to the specific scene in which the vehicle travels, and improves user experience of the vehicle drivers.

Fig. 3 shows a block diagram of an on-board warning sound apparatus for a vehicle according to an embodiment of the present application. As shown in Figure 3, the vehicle warning sound apparatus 300 includes a horn assembly 310, a control unit 320 and a loudspeaker 330. The horn assembly 310 includes a horn coil assembly 314 and a horn trumpet 312 connected to the horn coil assembly 314. The control unit 320 is connected with the horn assembly 310 and the loudspeaker 330 respectively.

The control unit 320 generates a sound intensity control signal S1 according to the current state of the vehicle and the surrounding environment of the vehicle. The horn assembly 310 generates a horn warning sound under the control of the sound intensity control signal S1. Here, the horn assembly 310 can be implemented in the same configuration as the horn assembly 110 described above. The working principle of intelligent horn warning sound produced by vehicle warning sound apparatus 300 with variable sound intensity is the same as that described above. Thus, the related description described above is also adaptive here, and will not be repeated.

The control unit 320 generates a simulated engine sound signal S2 according to the current state of the vehicle. The loudspeaker 330 emits the simulated engine warning sound based on the simulated engine sound signal S2 received from the control unit 320. The simulated engine warning sound refers to the simulated engine sound mentioned above.

It can be seen that by using the on-board warning sound apparatus, the quiet vehicles can emit intelligent horn warning sound and simulated engine warning sound, which can alert pedestrians and vehicles around the vehicle, and improve the user experience of vehicle drivers.

As shown in Figs. 3 and 4A, the horn coil assembly 314 and the control unit 320 are set in the first housing 30 of the vehicle warning sound apparatus 300. The horn trumpet 312 is fixedly connected with the first housing 30, for example, the horn trumpet 312 is fixed on the surface of the first housing 30. As shown in Fig. 5A, the loudspeaker 330 is arranged in the second housing 32 of the vehicle warning sound apparatus 300. As shown in Fig. 4A, for example, the first housing 30 is a circular housing, and the second housing 32 is a rectangular housing. Of course, the first housing 30 and the second housing 32 can also adopt other suitable styles according to practical application. The first housing 30 is independent of the second housing 32, and thus the first housing 30 and the second housing 32 can be installed in different positions in the vehicle.

According to the application, the vehicle warning sound apparatus has many advantages by setting the main part including the control part and the horn part in the first housing 30 and setting the loudspeaker 330 in the second housing 32, which is independent of the first housing 30. For example, different national standards for loudspeakers and horns can be achieved respectively, which reduces the cost of products. Moreover, it is more convenient to install and repair because of using two independent housings.

In the following part, the working principle of simulated engine sound produced by the vehicle warning sound apparatus 300 according to the present application is described in detail in conjunction with the drawings.

Referring to Fig. 3, the control unit 320 includes a microcontroller 332 and a bus interface 334. The microcontroller 332 is connected with a body control module 340 through bus interface 334. The control unit 320 of the vehicle warning sound apparatus 300 is similar to the control unit 120 of the vehicle warning sound device 100 in structure. The main difference between them lies in that the microcontroller 322 of the control unit 320 has a further data processing function. For example, the memory unit of the microcontroller 322 stores the simulated engine sound data corresponding to various states of the vehicle. The processor of the microcontroller 322 uses the stored simulated engine sound data to execute a data processing. In one example, the on-board warning sound apparatus 300 also includes a memory (not shown) outside the microcontroller 322, which stores alternative simulated engine sound data. Here, various states of the vehicle correspond to the corresponding engine states. The vehicle states include vehicle start state, acceleration or deceleration state, different vehicle speed state, reverse driving state, tail gate state, vehicle charging state, etc., without particular limitation. The body control module 340 is connected with multiple sensors for measuring vehicle states. For example, the sensors include a speed sensor for measuring the current vehicle speed. The speed sensor sends the measured speed signal to the body control module 340 and then the body control module 340 sends the speed signal to microcontroller 332 through bus interface 334. The current speed signal represents a current state of the vehicle, that is to say, the current state signal includes the measured speed signal. It should be understood that the current state signal of the vehicle can also include other signals, such as backing signal, tail gate signal, etc. The microcontroller 332 outputs a corresponding simulated engine sound signal according to the measured state signal. In an example, the current state signal is an idling state signal, and the microcontroller 332 outputs the engine sound signal that simulates the idle state of a traditional fuel vehicle, that is to say, the simulated engine sound corresponds to an engine sound in idle state.

The processing unit of microcontroller 322 calculates the simulated engine sound signal, which corresponds to the current state of the vehicle indicated by the current state signal, according to the current state signal received from bus interface 324 and the simulated engine sound data stored in the memory unit. For example, the memory unit of the microcontroller 322 stores multiple simulated engine sound data. The processing unit of microcontroller 322 calculates and synthesizes the simulated engine sound signal corresponding to the current state signal by using one or more simulated engine sound data stored in the memory unit. For example, an interpolation operation is used in this process, and other suitable data processing methods can also be adopted according to the specific situation. Thus, the simulated engine sound signal, which corresponds to the real-time continuous state of the vehicle, can be obtained by using a limited amount of simulated sound data stored in the memory.

In one embodiment, the memory unit of microcontroller 322 stores multiple simulated engine sound data. For example, multiple simulated engine sound data include simulated engine sound data D1, D2 and D3, where each D1-D3 corresponds to a simulated engine sound of a running state of the vehicle respectively. According to the current state signal of the vehicle obtained from the body control module 340, the processing unit of the microcontroller 322 uses the simulated engine sound data D1-D3 stored in the memory to calculate a simulated sound data D4, which corresponds to the current state signal. Then, microcontroller 322 converts the calculated sound data D4 into simulated engine sound signal S2 and outputs the simulated engine sound signal S2.

Continuing with Figure 3, the on-board warning sound apparatus 300 further includes an audio driving circuit 352. The audio driving circuit 352 is connected with the microcontroller 322, and the simulated engine sound signal S2, which is output from the microcontroller 322, is amplified. See Fig. 4A. A socket 354 is provided on the second housing 32 and a socket 324 is provided on the first housing 30. The socket 354 on the second housing 32 and the socket 324 on the first housing 30 is electrically connected. For example, the socket 354 is a two-pin socket, and the socket 324 is a seven-pin socket, two pins of which are connected with the two pins of socket 354. Of course, sockets 324 and 354 can also be connected in other ways using other types of sockets. The loudspeaker 330 receives the amplified simulated engine sound signal S2 from the audio driving circuit 352 through the socket 354, and emits a corresponding simulated engine sound. See 5F, in one embodiment, there are multiple slots C on a surface of the second housing 32 (for example, on the back surface of the housing 32), through which the simulated engine sound is emitted.

See Fig. 5A and 5G. The second housing 32 is waterproof splash housing. A sealing structure 362 is provided between the loudspeaker 330 and the second housing 32. The loudspeaker 330 is waterproof. For example, the sealing structure 362 case is a sealing ring. The sealing structure 362 can also be realized in other suitable ways. In this way, when the vehicle is in a splash environment such as rain, the loudspeaker 330 will not be damaged, and thus the function of emitting warning sound will not be affected.

In one example, the horn assembly 310 also includes a protection circuit 316, which is electrically connected to the driving circuit 318 to protect the driving circuit 318.

In one embodiment, the microcontroller 332, the driving circuit 318, the protection circuit 316 and the audio driving circuit 352 are arranged on a common circuit board in the first housing 30. The horn coil assembly 314 is connected to the circuit board through a lead. Of course, according to the specific application scenario, the layout of these components can also be realized in other suitable ways, without particular limitation. For example, according to the specific application environment, one or more of microcontroller 332, driver circuit 318, protection circuit 316 and audio driver circuit 352 are arranged on different circuit boards.

See Fig. 4A. The first housing 30 is a waterproof housing. As a result, vehicle horn will not be affected under such kind of environment, such as heavy rain which makes it immersed in water. Moreover, the main body of the vehicle horn can meet the waterproof test standard of the vehicle horn and thus has a wide range of applications.

According to the present application, the vehicle warning sound apparatus can emit horn loudspeaker warning sound with a moderate intensity in accordance with the current condition of the vehicle and the surrounding environment of the vehicle, and can also emit a simulated engine sound according to the current state of the vehicle. Furthermore, the vehicle horn, the control part and the loudspeaker are arranged in different housings, which facilitates installation, test and maintenance and can meet different test standards respectively, and thus reduces the cost of the warning apparatus. Therefore, the vehicle warning sound device of the present application realizes the function of warning pedestrians and surrounding vehicles with low cost and simple structure, and improves the user experience, and has a wide range of applications.

While certain embodiments have been described, these embodiments have been presented by way of example only, and are not intended to limit the scope of the disclosure. The attached claims and their equivalents are intended to cover all the modifications, substitutions and changes as would fall within the scope and spirit of the disclosure.

## Claims

1. An on-board warning sound apparatus for a vehicle, **characterized in that** the on-board warning sound apparatus comprises:
a horn assembly comprising a horn coil assembly and a horn trumpet connected with the horn coil assembly;
a loudspeaker arranged independently of the horn assembly; and
a control unit connected with the horn assembly and the loudspeaker, wherein the control unit is configured to generate a sound intensity control signal according to the current state of the vehicle and a surrounding environment of the vehicle, and to control the horn assembly to emit horn warning sounds based on the sound intensity control signal, and wherein the control unit is further configured to generate a simulated engine sound signal according to the current state of the vehicle, and to control the loudspeaker to emit simulated engine warning sounds based on the simulated engine sound signal.

2. The vehicle warning sound apparatus according to claim 1, **characterized in that** the horn coil assembly and the control unit are arranged in a first housing of the vehicle warning sound apparatus, the loudspeaker is disposed in a second housing of the vehicle warning sound apparatus, and the second housing is independent of the first housing.

3. The vehicle warning sound apparatus according to claim 1 or 2, **characterized in that** the control unit comprises a microcontroller having a memory unit for storing simulated engine sound data, and the simulated engine sound data corresponds to speeds of the vehicle.

4. The vehicle warning sound apparatus according to claim 3, **characterized in that** the control unit includes a bus interface disposed in the first housing and connected to a body control module of the vehicle.

5. The vehicle warning sound apparatus according to claim 4, **characterized in that** the microcontroller is electrically connected to the bus interface to receive a current state signal indicative of the current state of the vehicle from the body control module via the bus interface.

6. The vehicle warning sound apparatus according to claim 5, **characterized in that** the microcontroller generates the sound intensity control signal according to the current state signal and surrounding environment of the vehicle, wherein the current state of the vehicle includes current vehicle speed, reverse driving state, tail gate state and electric charging state, and the surrounding environment of the vehicle includes weather, lighting, road conditions and the region in which the vehicle travels.

7. The vehicle warning sound apparatus according to claim 5, **characterized in that** the microcontroller has a processing unit connected to the storage unit and the bus interface, wherein the processing unit is configured to determine the simulated engine sound signal corresponding to the current state according to the current state signal received from the bus interface and the simulated engine sound data stored in the storage unit.

8. The vehicle warning sound apparatus according to claim 3, **characterized in that** the horn assembly further comprises an audio driving circuit connected to the microcontroller and the loudspeaker, the audio driving circuit is configured to amplify the simulated engine sound signal received from the microcontroller, and the loudspeaker is configured to emit the simulated engine warning sound according to the amplified simulated engine sound signal.

9. The vehicle warning sound apparatus according to claim 8, **characterized in that** the second housing is provided with a socket, and the loudspeaker is electrically connected with the audio driving circuit via the socket.

10. The vehicle warning sound apparatus according to claim 8, **characterized in that** the horn coil assembly comprises an electromagnetic coil with a stationary iron core and a vibration diaphragm with a moving iron core, and the horn assembly further comprises a driving circuit) electrically connected with the electromagnetic coil and the microcontroller.

11. The vehicle warning sound apparatus according to claim 10, **characterized in that** the microcontroller is configured to control a duty cycle for driving a conduction of the electromagnetic coil based on the sound intensity control signal, so as to adjust an intensity of the horn warning sounds.

12. The vehicle warning sound apparatus according to claim 11, **characterized in that** the microcontroller, the driving circuit, the protection circuit and the audio driving circuit are disposed on a common circuit board in the first housing.

13. The vehicle warning sound apparatus according to claim 2, **characterized in that** the first housing is a waterproof housing, the second housing is a water splash prevention housing, and a sealing structure is provided between the loudspeaker and the second housing.

14. An on-board warning sound device for a vehicle, **characterized in that** the on-board warning sound device comprises:
a horn assembly comprising a horn coil assembly and a horn trumpet connected with the horn coil assembly; and
a control unit connected with the horn assembly, wherein the control unit is configured to generate a sound intensity control signal according to the current state of the vehicle and a surrounding environment of the vehicle, and wherein the control unit is further configured to control the horn assembly to emit horn warning sounds based on the sound intensity control signal.

15. The vehicle warning sound device according to claim 14, **characterized in that** the horn coil assembly and the control unit are arranged in the housing of the vehicle warning sound apparatus, wherein the housing is a waterproof housing, and the horn trumpet is fixed on an end surface of the housing.

16. The vehicle warning sound device according to claim 15, **characterized in that** the control unit comprises a microcontroller and a bus interface connected with the microcontroller, the bus interface is arranged in the housing and connected with a vehicle body control module, and the microcontroller is configured to receive a current state signal indicative of the current state of the vehicle from the vehicle body control module via the bus interface.

17. The vehicle warning sound device according to claim 16, **characterized in that** the microcontroller is configured to generate the sound intensity control signal according to the current state signal of the vehicle and surrounding environment of the vehicle, wherein the current state of the vehicle includes current vehicle speed, reverse driving state, tail gate state and electric charging state, and the surrounding environment of the vehicle includes weather, lighting, road conditions and the region in which the vehicle travels.

18. The vehicle warning sound device according to claim 16, **characterized in that** the horn coil assembly comprises an electromagnetic coil with a stationary iron core and a vibration diaphragm with a moving iron core, and the horn assembly further comprises a driving circuit electrically connected with the electromagnetic coil and the microcontroller, wherein the microcontroller is configured to control a duty cycle for driving a conduction of the electromagnetic coil based on the sound intensity control signal, so as to adjust an intensity of the horn warning sound.

19. The vehicle warning sound device according to claim 18, **characterized in that** the microcontroller, the driving circuit and the protection circuit are arranged on a common circuit board in the housing .
